# EUROPEAN PATENT APPLICATION

(11) **EP 4 549 274 A1**
(43) Date of publication of application: **07.05.2025**
(21) Application number: 23207721.4
(22) Date of filing: 03.11.2023
(51) Int. Cl.: B60W 30/16, B60W 30/12

(54) **METHOD FOR DETERMINING AN INSTRUCTION FOR AT LEAST PARTIALLY AUTONOMICALLY CONTROLLING DRIVING OF AN EGO VEHICLE IN AN OVERTAKING MANEUVER**

(71) Applicant: Volvo Car Corporation, 405 31 Göteborg (SE)
(72) Inventor: FEI, Zhennan, 40531 Göteborg (SE); YANG, Derong, 40531 Göteborg (SE)
(74) Representative: Maiwald GmbH

(57) **Abstract**

The disclosure relates to a method (100) for determining an instruction for at least partially autonomically controlling driving of an ego vehicle (10) in an overtaking maneuver involving two or more further vehicles (40, 42, 44) in a vicinity of the ego vehicle (10), wherein the method (100) comprises:
- obtaining first data indicative of the overtaking maneuver, in which a first vehicle (40) of the further vehicles (40, 42, 44) is about to overtake a second vehicle (42) of the further vehicles (40, 42, 44), based on a detection of the first vehicle (40) by a detection system (20) of the ego vehicle (10),
- obtaining second data indicative of a position of the ego vehicle (10) relative to the first vehicle (40) based on the detection of the first vehicle (40) by the detection system (20), and
- determining the instruction for at least partially autonomically controlling the driving of the ego vehicle (10) based on the first data and the second data.

## Description

### TECHNICAL FIELD

The present disclosure relates to a method for determining an instruction for at least partially autonomically controlling driving of an ego vehicle in an overtaking maneuver involving two or more further vehicles in a vicinity of the ego vehicle, a data processing apparatus, a vehicle, and a computer program product.

### BACKGROUND ART

Overtaking is a problematic maneuver when driving a vehicle because it is a major cause of traffic accidents. Statistically, more than 70% of overtaking accidents are caused by human factors due to lack of experience, psychological factors, little safety distance, and speed judgment errors. External factors e.g., icy pavements, slippery roads, and poor road condition, may contribute to the causing of an accident when overtaking.

Overtaking may become safer with the increased usage of automated or, in other words, autonomous vehicles. Automated vehicles can employ different sensors and cameras for detection of road condition, road objects and road participants. Based on such data, automated vehicles may evaluate a current driving situation and perform an overtaking maneuver with as little risk as possible such that it is ensured that no traffic accident occurs. This mostly rules out overtaking accidents due to the factors mentioned above.

However, as overtaking is a complex driving maneuver with a high risk of collision, the automation of this maneuver remains one of the toughest challenges in the development of a high level of automation in automated vehicles. In fact, unsupervised automated driving in vehicles of different manufacturers does currently not allow overtaking.

Therefore, besides overtaking itself being a problem due to the high number of traffic accidents being caused thereby, there is a further problem that even current automated vehicles may not be sophisticated enough to perform safe overtaking maneuvers.

### SUMMARY

The above problems are at least partially solved or alleviated by the subject matter of the independent claims of the present disclosure, wherein further examples are incorporated in the dependent claims.

According to a first aspect of this disclosure, there is provided a method for determining an instruction for at least partially autonomically controlling driving of an ego vehicle in an overtaking maneuver involving two or more further vehicles in a vicinity of the ego vehicle, wherein the method comprises:
- obtaining first data indicative of the overtaking maneuver, in which a first vehicle of the further vehicles is about to overtake a second vehicle of the further vehicles, based on a detection of the first vehicle by a detection system of the ego vehicle,
- obtaining second data indicative of a position of the ego vehicle relative to the first vehicle based on the detection of the first vehicle by the detection system, and
- determining the instruction for at least partially autonomically controlling the driving of the ego vehicle based on the first data and the second data.

The method is based on the finding of the inventors that while an at least partially autonomically controlled ego vehicle may not safely perform overtaking maneuvers itself, such ego vehicle may provide assistance to further or, in other words, other vehicles, which are involved in an overtaking maneuver. This assistance may be provided in the form of the instruction for the at least partially autonomically controlled ego vehicle, which, when being carried out, causes the ego vehicle to be at least partially autonomically controlled in its driving. The instruction and thereby the driving performed by the ego vehicle depends on the first data and the second data and thereby on the overtaking maneuver as being indicated by the first data and the second data. When the ego vehicle carries out its driving operation, the traffic safety may be increased for the further vehicles, the ego vehicle itself and/or any other vehicles in the vicinity by reducing the risk that an accident between the further vehicles and/or the ego vehicle occurs.

The ego vehicle may be an at least partially autonomically controlled vehicle. In other words, the ego vehicle may be an at least partially automated or autonomous vehicle. This means that the vehicle may comprise at least one or several (advanced) driver assistance functions or systems such as but not limited to cruise control, adaptive cruise control, collision avoidance system, emergency driver assistance, lance control and/ or lane change assistance. Hence, the at least partially autonomically controlling of the driving of the ego vehicle based on the instruction may be any control by any one or a combination of the aforementioned functions or systems. For example, the at least partially autonomically controlling of the driving of the ego vehicle may be a change in speed, e.g., decrease or increase, e.g., by breaking or accelerating, a change in distance to a road object or other road participant, e.g., other vehicle, a change of driving trajectory, a lane centering or lane diversion to the edge of the lane by the lane control, a lane change, any combination of the aforesaid and similar. The ego vehicle may also be an autonomically controlled vehicle or, in other words, an automated or autonomous vehicle of any automated level. For example, the driving of the vehicle may be fully controlled by the vehicle. This may also be referred to unsupervised driving.

Any of the first vehicle, the second vehicle or any other of the vehicles in the further vehicles may be manually or at least partially autonomically controlled vehicles. Accordingly, any one of the further vehicles may have or may not have driver assistance functions or systems as specified above.

The vicinity of the ego vehicle, in which the further vehicles are, may be defined by a detection range or detection area of the detection system of the ego vehicle. Accordingly, the ego vehicle may perform the method for any further vehicles in its detection range or detection area.

The method may be at least partly computer-implemented, and may be implemented in software or in hardware, or in software and hardware. For example, one, multiple or all of the steps of the method may be carried out by a computer, which may be from the ego vehicle. For example, the obtaining of the first data, obtaining of the second data and the determining of the instruction may be carried out by such computer or different computers. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

Besides the previously explained steps, the method may comprise further steps to carry out at least partially autonomically controlling of the driving of the ego vehicle based on the determined instruction. For example, the method may comprise providing the instruction to and/or receiving the instruction by a data processing apparatus, in particular a computer and/or control unit, of the ego vehicle for at least partially autonomically controlling the driving of the ego vehicle. For example, the method may comprise carrying out the instruction by the data processing apparatus. For example, the method may comprise at least partially autonomically controlling the driving of the ego vehicle based on the instruction.

The obtaining of the first data and/or second data may in particular be a determination of the respective data. In this case, the first data being indicative of the overtaking maneuver may comprise an evaluation of the respective detection of the first vehicle and, optionally, any other of the further vehicles mentioned herein in order to determine whether an overtaking maneuver is taking place or not. The determination of the second data may include the determination of the position of the ego vehicle and, optionally, any other positions mentioned herein. Further detailed examples of the obtaining steps and the determining step of the method are given below.

According to an example, the first data may be further based on a detection of the second vehicle by the detection system. With the information gained from the first data being based also on the detection of the second vehicle, the overtaking maneuver may be better evaluated for determining an appropriate instruction and thereby at least partial autonomic control of the driving of the ego vehicle to assist the overtaking maneuver.

According to an example, the first data may be determined based on a detection of at least one of a position, a speed, a driving direction and signaling of the first vehicle. In addition, the first data may be determined based on a detection of at least one of a position, a speed and a driving direction of the second vehicle by the detection system. The position of the first vehicle and/or the second vehicle may be a relative and/or absolute position. The speed of the first vehicle and/or second vehicle may be determined by determining the position of the first vehicle and/or second vehicle at at least two different times, in particular by continuously monitoring the position and therefrom calculating the speed. The driving direction may be calculated similar to the speed and based on the own driving direction of the ego vehicle, for example. The signaling of the first vehicle may for example be an acoustical and/or optical signaling, e.g. by a horn and/or indicator light of the first vehicle. Such signaling may be included in the first data by means of a camera and/or microphone of the detection system detecting the signaling. The signaling may be an indication that the first vehicle is about to overtake the second vehicle. However, the indication of the overtaking maneuver is not limited to being based on such signaling as is apparent from the different data types relating to the first vehicle and/or the second vehicle, e.g., position, speed, driving direction and signaling, which the first data may comprise. Based on any one or multiple of the aforementioned different data types, the first data may be indicative of the overtaking maneuver. For example, a position of the first vehicle adjacent the second vehicle and a speed of the first vehicle being higher than the speed of the second vehicle may be indicative of the overtaking maneuver without requiring the signaling. However, advantageously, multiple or all of the aforementioned data types may be used to more accurately indicate the overtaking maneuver.

In an example, the second data may be further indicative of the position of the ego vehicle relative to the second vehicle based on the detection of the second vehicle by the detection system. For example, it may be sufficient to obtain first data having a relative position of the first vehicle and/or the second vehicle to the ego vehicle. However, it may additionally or alternatively be provided that the first data has absolute positions of the first vehicle and/or second vehicle. For example, such absolute positions may be determined by determining the GPS position of the ego vehicle by means of a GPS unit of the ego vehicle, which may be part of the detection system, and calculating the GPS position of the first vehicle and/or second vehicle based on the position of the first vehicle and/or second vehicle relative to the ego vehicle, as may be determined by one or more detection units of the detection system, e.g., by one or more cameras.

According to an example, the second data may be indicative of a position of the ego vehicle in a lane in front of the second vehicle, wherein the instruction may be configured for accelerating the ego vehicle by at least partially autonomically controlling the driving of the ego vehicle. In this case, the instruction allows for the ego vehicle to increase its distance from the second vehicle. The increased distance creates more space between the ego vehicle and second vehicle, into which the first vehicle may merge when overtaking the second vehicle and thereby avoid a collision with opposing traffic in case the first vehicle is driving on the lane of the opposing traffic during the overtaking maneuver.

According to another example, the second data may be indicative of a position of the ego vehicle in a lane behind the first vehicle, wherein the instruction may be configured for decelerating the ego vehicle by at least partially autonomically controlling the driving of the ego vehicle. In this case, the instruction allows for the ego vehicle to increase its distance from the first vehicle and the second vehicle, which is about to be overtaken by the first vehicle. The increased distance creates more space between the ego vehicle and second vehicle, into which the first vehicle may merge when the overtaking of the second vehicle becomes too dangerous, e.g., due to opposing traffic in case the first vehicle is driving on the lane of the opposing traffic during the overtaking maneuver. The created space allows the first vehicle to abort the overtaking maneuver safely merge into the space without a risk of collision with the ego vehicle. Thereby, the first vehicle may avoid a collision with opposing traffic in case the first vehicle is driving on the lane of the opposing traffic during the overtaking maneuver.

According to an example, the second data may be based on a detection of at least one of a distance between the ego vehicle and the first vehicle, a lane of the ego vehicle and a lane of the first vehicle by the detection system. Additionally, the second data may be based on a detection of at least one of a distance between the ego vehicle and the second vehicle and a lane of the second vehicle by the detection system. Thereby, the instruction may be based on the position of the respective vehicles, i.e., ego vehicle, first vehicle and/or second vehicle, on the respective lanes of the road in the vicinity of the ego vehicle or, in other words, the road being travelled by these vehicles. The detection of the lanes may include their relative positioning on the road and/or the intended travel direction. By knowing the lanes on which the respective vehicles are travelling, the overtaking maneuver may be particularly accurately evaluated. For example, if it is determined that the second vehicle is travelling in the wrong direction on a lane, this may be seen as determinant for the overtaking maneuver and/or determining the instruction.

According to an example, the instruction may be configured for lateral movement of the ego vehicle towards an edge of its lane by at least partially autonomically controlling the driving of the ego vehicle. In particular, the ego vehicle may laterally move towards that edge of its lane for giving the first vehicle a better view on a lane with opposing traffic. Thereby, the ego vehicle may assist the first vehicle in its overtaking maneuver when the ego vehicle is located in front of the first vehicle. With the better view, the first vehicle may make a better judgement on when to start the overtaking maneuver. Any herein described configuration of the instruction may be alternative or in addition to any other one of the herein described configurations of the instruction.

According to an example, the instruction may be configured to increase a distance between the ego vehicle and the first vehicle by at least partially autonomically controlling the driving of the ego vehicle. This may be done by accelerating or decelerating the ego vehicle and/or a lane switch operation of the ego vehicle, for example, and depend on the relative position of the ego vehicle with respect to the first vehicle and/or the second vehicle.

According to an example, the first data may be indicative of opposing traffic in the overtaking maneuver, in which the first vehicle is about to overtake the second vehicle on a lane with the opposing traffic from a third vehicle of the further vehicles. Further, the first data may be based on a detection of the third vehicle by the detection system, and the second data may further be indicative of a position of the ego vehicle relative to the third vehicle based on the detection of the third vehicle by the detection system. Where opposing traffic from a third vehicle is involved, there may be an increased risk for an accident. Having the first data indicate of such opposing traffic and the second data indicative of the position of the ego vehicle relative to the third vehicle enables the method to determine an instruction that is optimally capable to cope with the overtaking maneuver, e.g., by means of the configurations of the instruction as herein described. The first data may in particular be further determined based on a detection of at least one of a position, a speed, a driving direction and signaling of the third vehicle.

According to an example, the method may further comprise transmitting an indication of the overtaking maneuver based on the first data and second data to the third vehicle via a wireless communication system of the ego vehicle. Thereby, the third vehicle may be notified by the ego vehicle of the overtaking maneuver and the potentially dangerous situation. The indication of the overtaking maneuver may comprise a notification relating to the first vehicle driving on the lane of the third vehicle, the first data and/or second data as such and/or an instruction for the third vehicle, e.g., to slow down or perform emergency braking, which may be based on an evaluation of the first data and/or second data of the method, for example.

According to an example, the detection system may comprise one or more of a LiDAR system, a radar system, a camera system, an ultrasonic system, and a communication system for vehicle-to-everything communication. Each one of the aforementioned systems may comprise one or more detection units. For example, the camera system may comprise multiple camera units as detection units arranged at different locations of the ego vehicle for increased detection radius. In another example, the wireless communication system may comprise a transmitting detection unit and/or a receiving detection unit for the vehicle-to-everything communication and vice versa.

According to a second aspect of this disclosure, there is provided a data processing apparatus comprising means for carrying out the method of the first aspect of this disclosure.

The data processing apparatus may be a computer, in particular of or for the ego vehicle, for example.

According to a third aspect of this disclosure, there is provided a vehicle comprising the data processing apparatus of the second aspect of this disclosure.

According to a fourth aspect of this disclosure, there is provided a computer program product comprising instructions which, when the program is executed by a computer, cause the computer to carry out the method of the first aspect of this disclosure.

The computer program product may be a computer program as such or a product, e.g., a computer-readable storage medium, comprising the computer program.

The computer program product may comprise different modules for carrying out the respective steps of the method of the first aspect of this disclosure. For example, the computer program product may comprise one or two obtaining modules for obtaining the first data and/or the second data, and/or one or more determining modules for determining the instruction. Any of the herein mentioned steps of the method may be carried out by the aforementioned modules or any other modules, which may be provided specifically for carrying out the respective step.

It is noted that the above examples may be combined with each other irrespective of the aspect involved. Accordingly, the method may be combined with structural features and, likewise, the apparatus, vehicle and computer program product may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic flow chart of a method for determining an instruction for at least partially autonomically controlling driving of an ego vehicle in an overtaking maneuver involving two or more further vehicles in a vicinity of the ego vehicle;
- Figure 2: shows a schematic illustration of the ego vehicle in the method of Fig. 1;
- Figure 3: shows a schematic illustration of the computer program product of the ego vehicle of Fig. 2;
- Figures 4a-4c: show a series of schematic illustrations of a first exemplary driving scenario, in which the ego vehicle may carry out the method of Fig. 1; and
- Figures 5a-5c: show a series of schematic illustrations of a second exemplary driving scenario, in which the ego vehicle may carry out the method of Fig. 1.

### DETAILED DESCRIPTION

The Figures are merely schematic representations and serve only to illustrate examples of the disclosure. Identical or equivalent elements are in principle provided with the same reference signs.

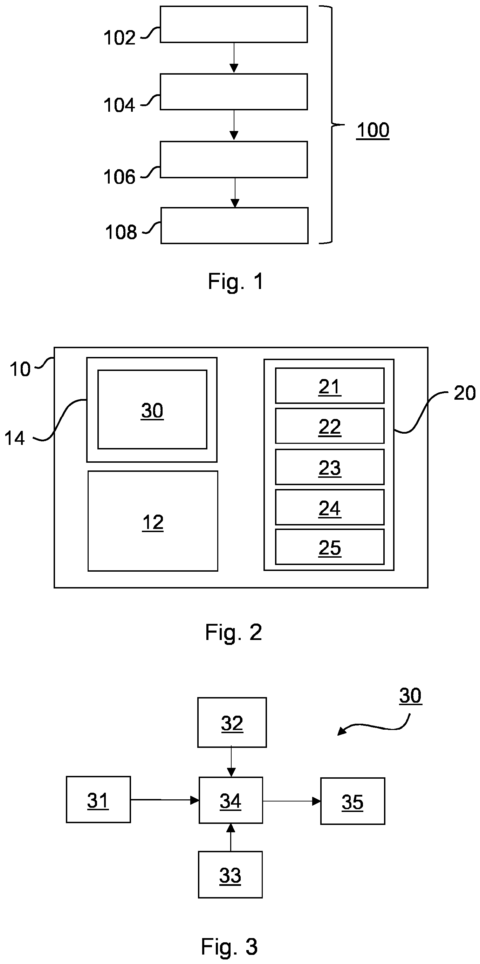

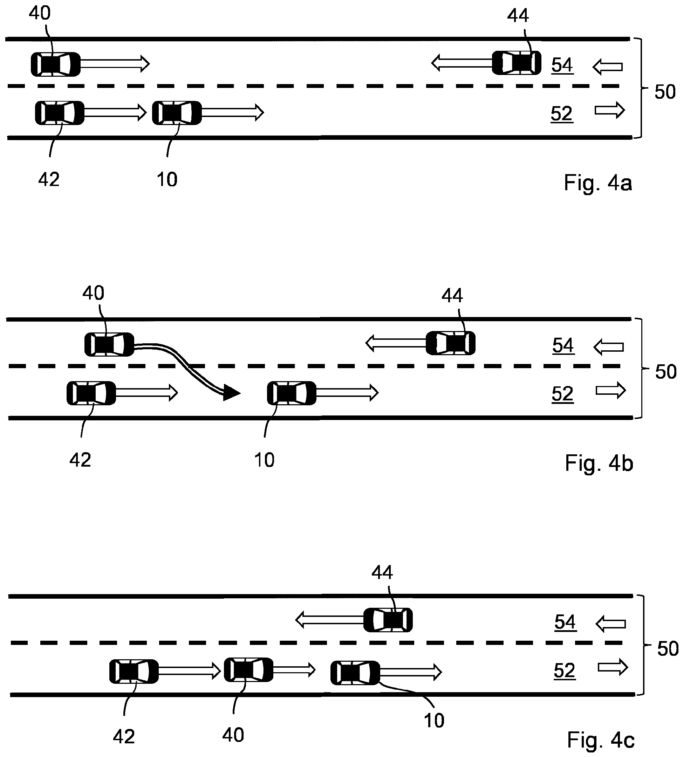

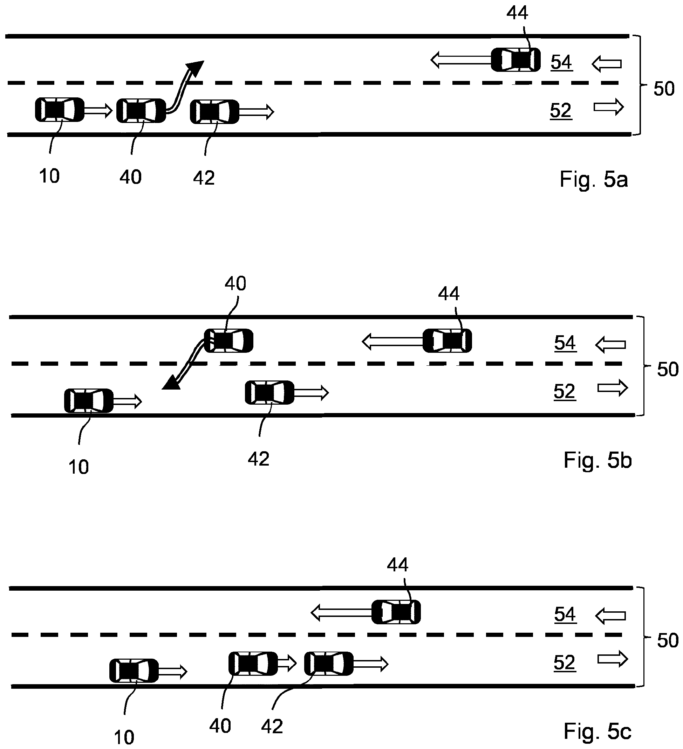

Figure 1 shows a method 100 for determining an instruction for at least partially autonomically controlling driving of an ego vehicle 10 in an overtaking maneuver involving two or more further vehicles 40, 42, 44 in a vicinity of the ego vehicle 10. Exemplary different driving scenarios with exemplary different overtaking maneuvers exemplary involving three further vehicles 40, 42, 44 are schematically illustrated in Figs. 4a to 4c and Figs. 5a to 5c. Figure 2 shows a schematic illustration of the ego vehicle 10 with its components.

In a step 102 of method 100, first data indicative of the overtaking maneuver, in which a first vehicle 40 of the further vehicles 40, 42, 44 is about to overtake a second vehicle 42 of the further vehicles 40, 42, 44, based on a detection of the first vehicle 40 and optionally the second vehicle 42 and/or a third vehicle 44 by a detection system 20 of the ego vehicle 10 (see Fig. 2), is obtained, in particular by determination of a data processing apparatus 12.

In particular, the first data may be determined based on a detection of at least one of a position, a speed, a driving direction and signaling of the first vehicle 40 and, optionally, of at least one of a position, a speed and a driving direction of the second vehicle 42 and/or the third vehicle 44 by the detection system 20. The detection system 20 may comprise one or more of the LiDAR system 21, radar system 22, camera system 23, ultrasonic system 24, and a wireless communication system 25 for vehicle-to-everything communication as shown in Fig. 2.

Step 102 may be carried out by the detection system 20 itself and/or the data processing apparatus 12 of the vehicle 10 as shown in Fig. 2. Such data processing apparatus 12 may be a computer of the vehicle 10, for example. In particular, the data processing apparatus 12 may determine the first data indicative of the overtaking maneuver based on the detection of the first vehicle 40 and optionally the second vehicle 42 and/or the third vehicle 44 by the detection system 20. For this purpose, the detection system 20 may provide the data processing apparatus 12 with data relating to its detection.

In a step 104 of method 100, following step 102, second data indicative of a position of the ego vehicle 10 relative to the first vehicle 40 based on the detection of the first vehicle 40 by the detection system 20 is obtained, in particular by determination of the data processing apparatus 12. Additionally, the first data may be determined such that it is further indicative of the position of the ego vehicle 10 relative to the second vehicle 42 and/or the third vehicle 44 based on the detection of the second vehicle 42 and/or the third vehicle 44 by the detection system 20.

Step 104 may be carried out by the detection system 20 itself and/or a data processing apparatus 12 of the vehicle 10 as shown in Fig. 2. In particular, the data processing apparatus 12 may determine the second data based on the detection of the first vehicle 40 by the detection system 20 and/or a known position of the ego vehicle 10, e.g., in the form of GPS data. For this purpose, the detection system 20 may provide the data processing apparatus 12 with data relating to its detection. For example, the second data may be based on a detection of at least one of a distance between the ego vehicle 10 and the first vehicle 40 and, optionally the second vehicle 42, a lane 52, 54 of the ego vehicle 10, a lane 52, 54 of the first vehicle 40 and, optionally, a lane 52, 54 of the second vehicle 42 and/or the third vehicle 44 by the detection system 20.

In a step 106 of method 100, following step 104, an instruction for at least partially autonomically controlling the driving of the ego vehicle 10 based on the first data and the second data may be determined. Accordingly, the ego vehicle 10 may be an at least partially autonomous or automated vehicle with one or more advanced driver assistant functions or systems. The instruction may be determined by the data processing apparatus 12. The instruction may be configured for reducing a risk of collision between any of the further vehicles 40, 42, 44 and/or the ego vehicle 10 based on the first data and the second data.

Then, in a step 108 of method 100, the instruction is being carried out by the data processing apparatus 108, thereby at least partially autonomically controlling the driving of the ego vehicle 10 based on the instruction such that the risk of a collision of the further vehicles 40, 42, 44 and/or the ego vehicle 10 may be reduced.

Figure 2 schematically illustrates the ego vehicle 10 and shows that the ego vehicle 10 may comprise a computer program product 14 besides the detection system 20 and the data processing apparatus 12. The computer program product 14 may be a computer program as such or a computer-readable storage medium having a computer program 30 stored thereon as shown in Fig. 2. Such computer program 30 may be read and executed by the data processing apparatus 12, thereby causing the method 100 to be carried out.

Figure 3 illustrates an exemplary configuration of the computer program 30 in modules 31, 32, 33, 34, 35, specifically as software modules. The individual modules may be involved in the obtaining of the first data and/or second data and/or in the determining of the instruction, for example. The number and specification of modules 31, 32, 33, 34, 35 herein is merely exemplary and may be different. Accordingly, the detailed description of the steps 102, 104, 106, 108 are merely exemplary with reference to the modules 31, 32, 33, 34, 35 and may alternatively be applied independently from the modules 31, 32, 33, 34, 35 or the computer program 30 altogether.

In this example, the first module 31 is configured for detecting an overtaking intention by the first vehicle 40. This may be done based on the detection of the first vehicle 40 and the second vehicle 42, for example. In particular, their detected position, speed, driving direction and/or signaling may be evaluated by the first module 31. In case the overtaking intention is determined by the first module 31 based on such evaluation, the second module 32 and/or the third module 33 may be activated. The first module 31 may comprise machine learning for learning different overtaking types, e.g., uniform overtaking or accelerated overtaking, thereby allowing for a better evaluation. The overtaking intention determination by the first module 31 may occur before obtaining the first data, such that the first data is indicative of the overtaking maneuver, e.g., by determining the first data, or after its obtaining or determination, e.g., when determining the instruction. In other words, the obtaining of the first data and/or the determining of the instruction may comprise a determination of the overtaking maneuver as an overtaking intention by the first vehicle 40, in particular based on an evaluation of the detection of the first vehicle 40 and/or second vehicle 42.

The second module 32 is configured for tracking or, in other words, monitoring the first vehicle 40 and/or the second vehicle 42 by the detection system 20. In other words, the first vehicle 40 and/or the second vehicle 42 may be continuously, i.e., at different times, detected. Accordingly, the first data and/or second data may be continuously obtained and/or determined or, in other words, the first data and/or second data may be based on a continuous detection of the first vehicle 40, the second vehicle 42 and/or the third vehicle 44. As previously explained, this may include a detection of their position, speed and/or driving direction. This enables to determine the instruction, i.e., the driving operation or adaptation of the ego vehicle 10 that is best suited to assist the overtaking maneuver in real time.

The third module 33 is configured to detect oncoming or, in other words, opposing traffic of the third vehicle 44 of the further vehicles 40, 42, 44. Similar to the first vehicle 40 and/or second vehicle 42, the first data may be based on a detection of the third vehicle 44, in particular its position, speed and/or driving direction, by the detection system 20. The third module 33 may further consider other factors such as the environment conditions e.g., road friction. The opposing traffic or third vehicle 44 may be tracked or, in other words, monitored by the detection system 20 similar to the tracking carried out by the second module 32.

The fourth module 34 is configured to determine the instruction. In other words, the fourth module 34 may be configured for determining how the ego vehicle 10 is to adopt its driving behavior by determining the instruction for at least partially autonomically controlling the driving of the ego vehicle 10. The output, e.g., the evaluations, of all modules 31, 32, 33 may be provided to the fourth module 34 for this purpose. For example, the fourth module 34 may determine one or more adjustments of a current trajectory of the ego vehicle 10, with the purpose to provide safer margins for the overtaking of the first vehicle 40 or to help it aborting the overtaking in a smooth manner.

If any one of the modules 31, 32, 33 is not sending an output or, in other words, is not being activated, than the fourth module 34 may not be activated. For example, if the first data is not obtained or determined indicative of the overtaking maneuver and/or if there is no risk of opposing traffic to the first vehicle 40, i.e., the third vehicle 44 is not detected, there may be no need for the ego vehicle 10 to adopt its driving.

The fifth module 35 receives the instruction from the fourth module 34 and may carry out the step 108 of method 100 as previously explained. Alternatively, the fifth module 35 may be part of another computer program and/or use one or more other computer programs. Also, the fifth module 35 may be implemented in hardware and/or software, e.g., it may be a control unit of the ego vehicle 10, for example.

Fig. 4a shows a driving scenario with an overtaking maneuver of the first vehicle 40 on a second lane 54 with opposing traffic in form of the third vehicle 44, the first vehicle 40 intending to overtake the second vehicle 42 driving on the first lane 52 of the road 50. The ego vehicle 10 is driving in the first lane 52 in front of the second vehicle 42. The mandatory driving direction of the lanes 52, 54 is indicated by an arrow on the right end of the lanes 52, 54.

Now, based on the method 100, the ego vehicle 10, specifically its data processing apparatus 12, will obtain the first data and second data. Based on the first data and second data, the ego vehicle 10 will know about the overtaking maneuver, e.g., by evaluating the position on the lanes of the further vehicles 40, 42, 44 and the distances relative to the ego vehicle 10, their speed and/or their driving direction, for example. The driving directions and/or trajectories of the vehicles 10, 40, 42, 44 are exemplary indicated by arrows. The ego vehicle 10 may determine that to assist the overtaking maneuver and to avoid any potentially dangerous situation involving the first vehicle 40 and the third vehicle 44 as opposing traffic, it needs to accelerate to gain distance from the second vehicle 42. Such driving of the ego vehicle 10 may be based on an at least partially autonomically control based on the determined instruction.

Thereby, the first vehicle 40 may be provided with an increased space or distance between the second vehicle 42 and the ego vehicle 10 as seen in Fig. 4b, which may be few milliseconds or seconds later in the driving scenario than Fig. 4a. Additionally, or alternatively, the ego vehicle 40 may laterally move towards the edge of its lane 52 as exemplary shown for the ego vehicle 40 in Figs. 5a to 5c to increase the space between the second vehicle 42 and the ego vehicle 10.

The first vehicle 40 may maneuver into this increased space case it is too dangerous for the first vehicle 40 to overtake both, the second vehicle 42 and the ego vehicle 10, e.g., due to too small distance between the first vehicle 40 and the third vehicle 44, a too low speed and/or acceleration of the first vehicle 40 and/or a too high speed and/or acceleration of the third vehicle 44, for example. As seen in Fig. 4c few milliseconds or seconds later than Fig. 4b, the first vehicle 40 maneuvered into the created or increased space between the second vehicle 42 and the ego vehicle 10, thereby avoiding an accident.

A different driving scenario with another exemplary overtaking maneuver is shown in Figs. 5a to 5c. In this case, as seen in Fig. 5a, the ego vehicle 10 is located on the first lane 52 behind the first vehicle 40 setting out to overtake the second vehicle 42 located in front of the first vehicle 40. However, there is opposing traffic in the form of the third vehicle 44. The ego vehicle 10 may, based on the first data and second data, assess that the overtaking maneuver may be too dangerous and determine and carry out an instruction for at least partially autonomously controlling the driving of the ego vehicle 10 to ensure that the overtaking maneuver may be resolved without accident.

In this example, as shown in Fig. 5b few milliseconds or seconds later than Fig. 5a, the ego vehicle 10 decelerated, e.g., by braking, such that the distance between the ego vehicle 10 and the second vehicle 42 is increased. This once again creates extra space, which the first vehicle 40 may use if it intends to abort the overtaking maneuver. The extra space allows the first vehicle 40 to safely abort the overtaking maneuver because the risk of collision with the ego vehicle 10 behind the second vehicle 42 is greatly reduced by the extra space due to the driving adaptation of the ego vehicle 10. As seen in Fig. 5c few milliseconds or seconds later than Fig. 5b, the first vehicle 40 was able to abort the overtaking maneuver and is now in the first lane 52 again.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: ego vehicle
- 12: data processing apparatus
- 14: computer program product
- 20: detection system
- 21: LiDAR system
- 22: radar system
- 23: camera system
- 24: ultrasonic system
- 25: wireless communication system
- 30: computer program
- 31-35: modules
- 40: first vehicle
- 42: second vehicle
- 44: third vehicle
- 50: road
- 52: first lane
- 54: second lane
- 100: method
- 102 - 108: steps

## Claims

1. A method (100) for determining an instruction for at least partially autonomically controlling driving of an ego vehicle (10) in an overtaking maneuver involving two or more further vehicles (40, 42, 44) in a vicinity of the ego vehicle (10), wherein the method (100) comprises:
- obtaining first data indicative of the overtaking maneuver, in which a first vehicle (40) of the further vehicles (40, 42, 44) is about to overtake a second vehicle (42) of the further vehicles (40, 42, 44), based on a detection of the first vehicle (40) by a detection system (20) of the ego vehicle (10),
- obtaining second data indicative of a position of the ego vehicle (10) relative to the first vehicle (40) based on the detection of the first vehicle (40) by the detection system (20), and
- determining the instruction for at least partially autonomically controlling the driving of the ego vehicle (10) based on the first data and the second data.

2. The method (100) of claim 1,
wherein the first data is further based on a detection of the second vehicle (42) by the detection system (20).

3. The method (100) of claim 2,
wherein the first data is determined based on a detection of at least one of a position, a speed, a driving direction and signaling of the first vehicle (40) and of at least one of a position, a speed and a driving direction of the second vehicle (42) by the detection system (20).

4. The method (100) of claim 2 or 3,
wherein the second data is further indicative of the position of the ego vehicle (10) relative to the second vehicle (42) based on the detection of the second vehicle (42) by the detection system (20).

5. The method (100) of claim 4,
wherein the second data is indicative of a position of the ego vehicle (10) in a lane (52, 54) in front of the second vehicle (42), and
wherein the instruction is configured for accelerating the ego vehicle (10) by at least partially autonomically controlling the driving of the ego vehicle (10).

6. The method (100) of any one of claims 1 to 4,
wherein the second data is indicative of a position of the ego vehicle (10) in a lane (52, 54) behind the first vehicle (40), and
wherein the instruction is configured for decelerating the ego vehicle (10) by at least partially autonomically controlling the driving of the ego vehicle (10).

7. The method (100) of any one of the previous claims,
wherein the second data is based on a detection of at least one of a distance between the ego vehicle (10) and the first vehicle (40), a lane (52, 54) of the ego vehicle (10) and a lane (52, 54) of the first vehicle (40) by the detection system (20).

8. The method (100) of claim any one of the previous claims,
wherein the instruction is configured for lateral movement of the ego vehicle (10) towards an edge of its lane (52, 54) by at least partially autonomically controlling the driving of the ego vehicle (10).

9. The method (100) of any one of the previous claims,
wherein the instruction is configured to increase a distance between the ego vehicle (10) and the first vehicle (40) by at least partially autonomically controlling the driving of the ego vehicle (10).

10. The method (100) of claim any one of the previous claims,
wherein the first data is indicative of opposing traffic in the overtaking maneuver, in which the first vehicle (40) is about to overtake the second vehicle (42) on a lane (52, 54) with the opposing traffic from a third vehicle (44) of the further vehicles (40, 42, 44), the first data being based on a detection of the third vehicle (44) by the detection system (20),
and wherein the second data is further indicative of a position of the ego vehicle (10) relative to the third vehicle (44) based on the detection of the third vehicle (44) by the detection system (20).

11. The method (100) of claim 10, wherein the method (100) further comprises:
- transmitting an indication of the overtaking maneuver based on the first data and second data to the third vehicle (44) via a wireless communication system (24) of the ego vehicle. (10).

12. The method (100) of claim any one of the previous claims, wherein the detection system (20) comprises one or more of a LiDAR system (21), a radar system (22), a camera system (23), an ultrasonic system (24), and a wireless communication system (25) for vehicle-to-everything communication.

13. A data processing apparatus (12) comprising means for carrying out the method (100) of any one of claims 1 to 12.

14. A vehicle (10) comprising the data processing apparatus (12) of claim 13.

15. A computer program product (14) comprising instructions which, when the program is executed by a computer, cause the computer to carry out the method (100) of any one of claims 1 to 12.

## Amended claims

### Amended claims in accordance with Rule 137(2) EPC.

1. A method (100) for determining an instruction for at least partially autonomically controlling driving of an ego vehicle (10) in an overtaking maneuver involving two or more further vehicles (40, 42, 44) in a vicinity of the ego vehicle (10), wherein the method (100) comprises:
- obtaining, by a data processing apparatus (12) of the ego vehicle (1), first data indicative of the overtaking maneuver, in which a first vehicle (40) of the further vehicles (40, 42, 44) is about to overtake a second vehicle (42) of the further vehicles (40, 42, 44), based on a detection of the first vehicle (40) by a detection system (20) of the ego vehicle (10),
- obtaining, by the data processing apparatus (12), second data indicative of a position of the ego vehicle (10) relative to the first vehicle (40) based on the detection of the first vehicle (40) by the detection system (20), and
- determining, by the data processing apparatus (12), the instruction for at least partially autonomically controlling the driving of the ego vehicle (10) based on the first data and the second data,
wherein the first data is indicative of opposing traffic in the overtaking maneuver, in which the first vehicle (40) is about to overtake the second vehicle (42) on a lane (52, 54) with the opposing traffic from a third vehicle (44) of the further vehicles (40, 42, 44), the first data being based on a detection of the third vehicle (44) by the detection system (20),
and wherein the second data is further indicative of a position of the ego vehicle (10) relative to the third vehicle (44) based on the detection of the third vehicle (44) by the detection system (20).

2. The method (100) of claim 1,
wherein the first data is further based on a detection of the second vehicle (42) by the detection system (20).

3. The method (100) of claim 2,
wherein the first data is determined based on a detection of at least one of a position, a speed, a driving direction and signaling of the first vehicle (40) and of at least one of a position, a speed and a driving direction of the second vehicle (42) by the detection system (20).

4. The method (100) of claim 2 or 3,
wherein the second data is further indicative of the position of the ego vehicle (10) relative to the second vehicle (42) based on the detection of the second vehicle (42) by the detection system (20).

5. The method (100) of claim 4,
wherein the second data is indicative of a position of the ego vehicle (10) in a lane (52, 54) in front of the second vehicle (42), and
wherein the instruction is configured for accelerating the ego vehicle (10) by at least partially autonomically controlling the driving of the ego vehicle (10).

6. The method (100) of any one of claims 1 to 4,
wherein the second data is indicative of a position of the ego vehicle (10) in a lane (52, 54) behind the first vehicle (40), and
wherein the instruction is configured for decelerating the ego vehicle (10) by at least partially autonomically controlling the driving of the ego vehicle (10).

7. The method (100) of any one of the previous claims,
wherein the second data is based on a detection of at least one of a distance between the ego vehicle (10) and the first vehicle (40), a lane (52, 54) of the ego vehicle (10) and a lane (52, 54) of the first vehicle (40) by the detection system (20).

8. The method (100) of claim any one of the previous claims,
wherein the instruction is configured for lateral movement of the ego vehicle (10) towards an edge of its lane (52, 54) by at least partially autonomically controlling the driving of the ego vehicle (10).

9. The method (100) of any one of the previous claims,
wherein the instruction is configured to increase a distance between the ego vehicle (10) and the first vehicle (40) by at least partially autonomically controlling the driving of the ego vehicle (10).

10. The method (100) of any one of the previous claims, wherein the method (100) further comprises:
- transmitting an indication of the overtaking maneuver based on the first data and second data to the third vehicle (44) via a wireless communication system (24) of the ego vehicle. (10).

11. The method (100) of claim any one of the previous claims, wherein the detection system (20) comprises one or more of a LiDAR system (21), a radar system (22), a camera system (23), an ultrasonic system (24), and a wireless communication system (25) for vehicle-to-everything communication.

12. A data processing apparatus (12) comprising means for carrying out the method (100) of any one of claims 1 to 11.

13. A vehicle (10) comprising the data processing apparatus (12) of claim 12.

14. A computer program product (14) comprising instructions which, when the program is executed by a computer, cause the computer to carry out the method (100) of any one of claims 1 to 11.
